# EUROPÄISCHE PATENTSCHRIFT

(11) **EP 2 717 404 B1**
(45) Veröffentlichungstag und Bekanntmachung des Hinweises auf die Patenterteilung: **16.09.2015**
(21) Anmeldenummer: 13175654.6
(22) Anmeldetag: 09.07.2013
(51) Int. Cl.: H02H 9/04, B60L 3/00, H02J 7/14

(54) **Schutzschaltung für Elektrorollstühle**
Protection circuit for electric wheelchairs
Circuit de protection pour chaises roulantes électriques

(30) Priorität: 08.10.2012 DE 102012109528
(43) Veröffentlichungstag der Anmeldung: 09.04.2014
(73) Patentinhaber: AAT Alber Antriebstechnik GmbH, 72458 Albstadt (DE)
(72) Erfinder:
(74) Vertreter: Kohler Schmid Möbus Patentanwälte

(56) Entgegenhaltungen:
- EP-A2- 1 381 137
- JP-A- H09 131 083

## Beschreibung

Die Erfindung betrifft eine Schutzschaltung für Rollstühle und andere Kleinfahrzeuge mit motorischen Zusatzantrieben und mindestens einem elektrischen Energiespeicher, nach dem Oberbegriff des Anspruchs 1. Eine solche Schutzschaltung ist aus der JP H09131083 A bereits bekannt. Diese Schutzschaltung wird jedoch ständig mit Batteriestrom betrieben und trägt daher zu einer rascheren Entladung des Akkus bei.

Der vorliegenden Erfindung liegt daher die Aufgabe zugrunde, bei Rollstühlen und anderen Kleinfahrzeugen eine Schutzschaltung gegen Zerstörungen elektronischer Komponenten durch zu hohe induzierte Spannungen beim Arbeiten des Motors als Generator bereitzustellen, die die Batterie des Fahrzeugs nicht belastet und nach einem Schaltvorgang erneut aktivierbar ist.

Die Aufgabe wird gelöst durch eine Schutzschaltung für Rollstühle und andere Kleinfahrzeuge mit den Merkmalen des Anspruchs 1.

Die Schutzschaltung ist vorzugsweise zwischen dem Motor und dem Akku angeordnet. Durch rechtzeitiges Kurzschließen der vom Motor induzierten Spannung können Zerstörungen elektronischer Komponenten in den Steuereinrichtungen und natürlich auch eine Zerstörung von Akkumulatorzellen vermieden werden. Durch den Kurzschluss der Motorspannung kann außerdem das vom Motor angetriebene Rad oder die angetriebenen Räder abgebremst werden, was der Sicherheit des Fahrers des Rollstuhls oder Kleinfahrzeugs dient.

Die Schutzschaltung selbst wird ebenfalls mit der vom Motor induzierten Spannung betrieben. Da diese Spannung nach dem Schließen des Schalters nicht mehr zur Verfügung steht, weist die Schutzschaltung mindestens einen Pufferkondensator auf, der die Schutzschaltung nach dem Kurzschließen der vom Motor induzierten Spannung für eine bestimmte Zeitdauer durch Aufrechterhalten einer Pufferspannung weiter mit Strom versorgt.

Da die Pufferspannung dabei stetig abnimmt, ist es weiter von Vorteil, wenn bei Unterschreiten eines Schalt-Schwellwerts der Pufferspannung die Schutzschaltung den Kurzschluss durch Öffnen des Schalters wieder aufhebt, sodass die Schutzschaltung wieder mit der vom Motor induzierten Spannung betrieben wird und die Pufferkondensatoren wieder aufgeladen werden können.

Nach Öffnen des Schalters nimmt die Schutzschaltung die Überwachung der induzierten Spannung wieder auf. Dabei kann sie vorzugsweise nach Öffnen des Schalters prüfen, ob die induzierte Spannung einen unterhalb des kritischen Schwellwerts liegenden Ausschalt-Schwellwert unterschritten hat, und den Schalter erneut schließen, wenn die induzierte Spannung höher als der Ausschalt-Schwellwert ist. Das Vorsehen eines zweiten, niedrigeren Schwellwerts für das Schalten der induzierten Spannung, nachdem diese Spannung kurzgeschlossen wurde, bewirkt, dass die induzierte Spannung erst ausreichend reduziert und damit das Fahrzeug abgebremst wird, bevor erneut die reguläre Überwachung auf Überschreiten des kritischen Schwellwerts durch die induzierte Spannung erfolgt.

Wenn die Schutzschaltung durch die induzierte Spannung betrieben wird, ist es außerdem sinnvoll, dass die Schutzschaltung erst dann in einen aktiven Modus schaltet, wenn die induzierte Spannung einen unteren Grenzwert erreicht, da eine Überwachung der induzierten Spannung nur auf Überschreiten hoher Schwellwerte erfolgt.

Der Schalter kann vorzugsweise ein MOSFET sein. Aber auch andere Transistoren oder Relais lassen sich als Schalter einsetzen.

Bei Rollstühlen ist in der Regel für jedes Laufrad ein gesonderter Antriebsmotor vorgesehen. Jedem dieser Motoren muss daher eine Schutzschaltung zugeordnet werden. Es ist daher zweckmäßig, wenn die Schutzschaltung mit einer Steuerelektronik verbindbar ist, welche die Schaltzustände mehrerer Schutzschaltungen überwacht. Dadurch kann die Schutzschaltung durch die Steuerelektronik aktiviert werden, wenn mindestens eine der anderen an die Steuerelektronik angeschlossenen Schutzschaltungen ebenfalls im aktiven Modus ist. Andernfalls müsste eine Schutzschaltung den Strom eines anderen Motors mit übernehmen.

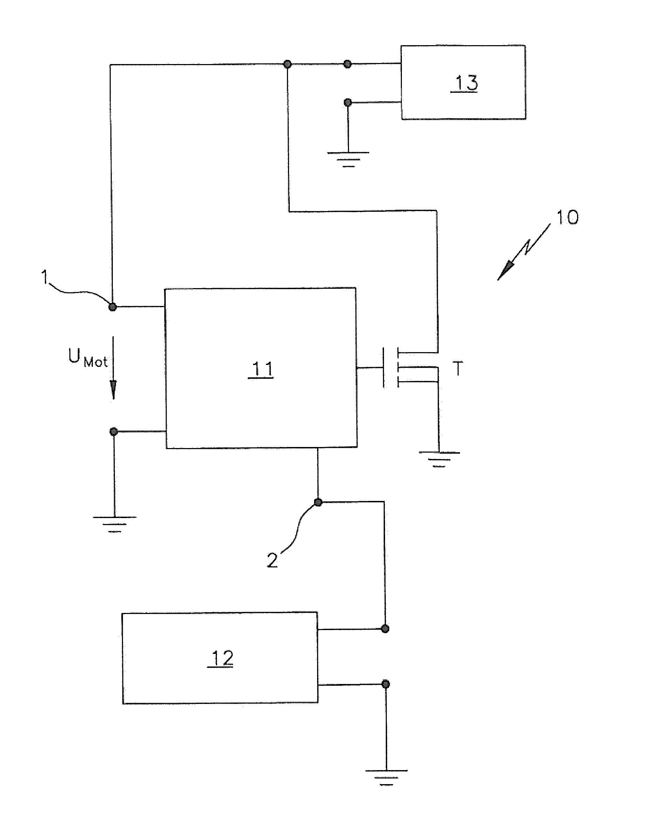

Die beigefügte Zeichnung zeigt ein schematisches Blockschaltbild einer erfindungsgemäßen Schutzschaltung 10. Sie weist eine intelligente Schaltung 11 mit zwei Eingängen 1 und 2 auf. Am Eingang 1 liegt die induzierte Spannung U_{Mot} eines Motors 13 an. Der zweite Eingang 2 ist mit einer Steuerelektronik 12 verbunden, die mehrere Schutzschaltungen 10 überwacht. Am Ausgang der intelligenten Schaltung 11 ist ein MOSFET-Transistor T als Schalter angeordnet.

Wird der Schalter T geschlossen, so wird die induzierte Spannung U_{Mot} des Motors 13 kurzgeschlossen. Das Schließen des Schalters T wird von der intelligenten Schaltung 11 ausgelöst, sobald die Spannung U_{Mot} an ihrem Eingang 1 einen kritischen Schwellwert überschreitet. Damit die intelligente Schaltung 11 auch nach Schließen des Schalters T ihre Überwachungsfunktion weiter erfüllen kann, sind in der Schaltung 11 ein oder mehrere hier nicht näher dargestellte Pufferkondensatoren vorhanden, die die Stromversorgung der Schaltung 11 übernehmen, solange die Spannung U_{Mot} kurzgeschlossen ist. Sie sorgen dafür, dass die Schaltung 11 den Schalter T wieder öffnen und den Wert der Spannung U_{Mot} erneut bestimmen kann. Ergibt diese Bestimmung, dass die Spannung U_{Mot} nach dem Schließen des Schalters T einen unteren Schwellwert unterschritten hat, bleibt der Schalter T weiter geöffnet. Andernfalls wird der Schalter T erneut geschlossen.

Darüber hinaus kann das Schließen und Öffnen des Schalters T auch durch die Steuerelektronik 12 kontrolliert werden. Sobald eine der Schutzschaltungen 10 bei Überschreiten einer Grenzspannung durch U_{Mot} im aktiven Modus ist, müssen auch alle anderen Schutzschaltungen 10 aktiviert werden, damit nicht mehrere Motoren durch eine Schutzschaltung 10 überwacht werden. Schaltet einer der Schalter T, werden auch die Schalter T der anderen Schutzschaltungen 10 geschlossen. Weiter verhindert die Steuerschaltung 12 ein Kurzschließen des Akkumulators.

## Patentansprüche

1. Schutzschaltung für Rollstühle und andere Kleinfahrzeuge mit motorischen Zusatzantrieben und mindestens einem elektrischen Energiespeicher, der bei manueller Bewegung oder aufgrund einer Bergabfahrt selbsttätigen Bewegung des Rollstuhls über die Schutzschaltung (10) durch eine vom Motor (13) induzierte Spannung (U_{Mot}) wieder aufladbar ist, wobei die Schutzschaltung (10) bei Überschreiten eines vorgebbaren kritischen Schwellwerts für die induzierte Spannung (U_{Mot}) die vom Motor (13) induzierte Spannung (U_{Mot}) durch Schließen eines Schalters (T) kurzschließt, **dadurch gekennzeichnet, dass** die Schutzschaltung (10) mit der vom Motor (13) induzierten Spannung (U_{Mot}) betrieben wird und mindestens einen Pufferkondensator aufweist, der die Schutzschaltung (10) nach dem Kurzschließen der vom Motor (13) induzierten Spannung (U_{Mot}) für eine bestimmte Zeitdauer durch Aufrechterhalten einer Pufferspannung weiter mit Strom versorgt.

2. Schutzschaltung nach Anspruch 1, **dadurch gekennzeichnet, dass** bei Unterschreiten eines Schalt-Schwellwerts der Pufferspannung die Schutzschaltung (10) den Kurzschluss durch Öffnen des Schalters (T) wieder aufhebt.

3. Schutzschaltung nach Anspruch 2, **dadurch gekennzeichnet, dass** sie nach Öffnen des Schalters (T) prüft, ob die induzierte Spannung (U_{Mot}) einen unterhalb des kritischen Schwellwerts liegenden Ausschalt-Schwellwert unterschritten hat, und den Schalter (T) erneut schließt, wenn die induzierte Spannung (U_{Mot}) höher als der Ausschalt-Schwellwert ist.

4. Schutzschaltung nach einem der vorhergehenden Ansprüche, **dadurch gekennzeichnet, dass** die Schutzschaltung (10) in einen aktiven Modus schaltet, wenn die induzierte Spannung (U_{Mot}) einen unteren Grenzwert erreicht.

5. Schutzschaltung nach einem der vorhergehenden Ansprüche, **dadurch gekennzeichnet, dass** der Schalter (T) ein MOSFET ist.

6. Schutzschaltung nach einem der vorhergehenden Ansprüche, **dadurch gekennzeichnet, dass** sie mit einer Steuerelektronik (12) verbindbar ist, welche die Schaltzustände mehrerer Schutzschaltungen (10) überwacht.

7. Schutzschaltung nach Anspruch 6, **dadurch gekennzeichnet, dass** die Schutzschaltung (10) durch die Steuerelektronik (12) aktivierbar ist, wenn mindestens eine der anderen an die Steuerelektronik (12) angeschlossenen Schutzschaltungen (10) ebenfalls im aktiven Modus ist.

## Claims

1. Protective circuit for wheelchairs and other small vehicles with add-on power drives and at least one electrical energy storage device rechargeable by a voltage (U_{Mot}) induced by the motor (13) via the protective circuit (10) when the wheelchair is moved manually or moves automatically as a result of downhill travel, wherein the protective circuit (10) short-circuits the voltage (U_{Mot}) induced by the motor (13) by closing a switch (T) when the induced voltage (U_{Mot}) exceeds a predetermined critical threshold, **characterised in that** the protective circuit (10) is operated with the voltage (U_{Mot}) induced by the motor (13) and comprises at least one back-up capacitor which continues to supply the protective circuit (10) with power for a predetermined period of time after the short-circuiting of the voltage (U_{Mot}) induced by the motor (13) by maintaining a back-up voltage.

2. Protective circuit according to claim 1, **characterised in that** the protective circuit (10) rectifies the short circuit by opening the switch (T) when the back-up voltage falls below a switching threshold.

3. Protective circuit according to claim 2, **characterised in that**, after opening the switch (T), it checks whether the induced voltage (U_{Mot}) has fallen below a switch-off threshold below the critical threshold and closes the switch (T) again if the induced voltage (U_{Mot}) is higher than the switch-off threshold.

4. Protective circuit according to one of the preceding claims, **characterised in that** the protective circuit (10) switches to an active mode when the induced voltage (U_{Mot}) reaches a lower limit.

5. Protective circuit according to one of the preceding claims, **characterised in that** the switch (T) is a MOSFET.

6. Protective circuit according to one of the preceding claims, **characterised in that** it can be connected to a control unit (12) that monitors the control status of several protective circuits (10).

7. Protective circuit according to claim 6, **characterised in that** the protective circuit (10) can be activated by the control unit (12) when at least one of the other protective circuits (10) connected to the control unit (12) is also in the active mode.

## Revendications

1. Circuit de protection pour fauteuils roulants et autres petits véhicules dotés d'entraînements supplémentaires motorisés et d'au moins un accumulateur d'énergie électrique qui, lors du déplacement manuel ou du fait d'un mouvement autonome en descente du fauteuil, est rechargeable, par le biais du circuit de protection (10), par une tension (U_{Mot}) induite par le moteur (13), dans lequel, en cas de passage au-dessus d'une valeur de seuil critique pouvant être prédéfinie pour la tension (U_{Mot}) induite, le circuit de protection (10) court-circuite par la fermeture d'un commutateur (T) la tension (U_{Mot}) induite par le moteur (13), **caractérisé en ce que** le circuit de protection (10) est actionné avec la tension (U_{Mot}) induite par le moteur (13) et présente au moins un condensateur tampon qui continue à alimenter en courant, par le maintien d'une tension tampon, le circuit de protection (10) après la mise en court-circuit de la tension (U_{Mot}) induite par le moteur (13) pendant une durée définie.

2. Circuit de protection selon la revendication 1, **caractérisé en ce que**, en cas de passage au-dessous d'une valeur de seuil de commutation de la tension tampon, le circuit de protection (10) neutralise de nouveau le court-circuit par l'ouverture du commutateur (T).

3. Circuit de protection selon la revendication 2, **caractérisé en ce que**, après l'ouverture du commutateur (T), il vérifie si la tension (U_{Mot}) induite est passée au-dessous d'une valeur de seuil de mise hors circuit située au-dessous de la valeur de seuil critique et il referme le commutateur (T) quand la tension (U_{Mot}) induite est supérieure à la valeur de seuil de mise hors circuit.

4. Circuit de protection selon l'une des revendications précédentes, **caractérisé en ce que** le circuit de protection (10) commute vers un mode actif quand la tension (U_{Mot}) induite atteint une valeur limite inférieure.

5. Circuit de protection selon l'une des revendications précédentes, **caractérisé en ce que** le commutateur (T) est un MOSFET.

6. Circuit de protection selon l'une des revendications précédentes, **caractérisé en ce qu'**il peut être connecté à une électronique de commande (12) qui surveille les états de commutation de plusieurs circuits de protection (10).

7. Circuit de protection selon la revendication 6, **caractérisé en ce que** le circuit de protection (10) peut être activé par l'électronique de commande (12) quand au moins un des autres circuits de protection (10) connectés à l'électronique de commande (12) est également dans le mode actif.
